# FASCICULE DE BREVET EUROPEEN

(11) **EP 2 507 712 B1**
(45) Date de publication et mention de la délivrance du brevet: **22.01.2014**
(21) Numéro de dépôt: 10805264.8
(22) Date de dépôt: 24.11.2010
(51) Int. Cl.: G06F 13/28, G06F 13/40

(54) **SYSTEME AUTORISANT DES TRANSFERTS DIRECTS DE DONNEES ENTRE DES MEMOIRES DE PLUSIEURS ELEMENTS DE CE SYSTEME**
SYSTEM ZUR DIREKTE DATENÜBERTRAGUNG ZWISCHEN SPEICHERN VON MEHREREN ELEMENTEN DIESES SYSTEMS
SYSTEM FOR DIRECT DATA TRANSFER BETWEEN MEMORIES OF PLURALITY OF ELEMENTS OF THIS SYSTEM

(30) Priorité: 01.12.2009 FR 0905777
(43) Date de publication de la demande: 10.10.2012
(73) Titulaire: Bull SAS, 78340 Les Clayes-sous-Bois (FR)
(72) Inventeur: COUVEE, Philippe, F-38190 Villard Bonnot (FR); FICET, Jean-Vincent, F-73110 La Chapelle Blanche (FR); KALEMKARIAN, Yann, F-38100 Grenoble (FR)
(74) Mandataire: Imbert de Tremiolles, Ghislain
(86) Numéro de dépôt international: PCT/FR2010/052502
(87) Numéro de publication internationale: WO 2011/067507

(56) Documents cités:
- EP-A1- 1 313 023
- EP-A2- 1 557 764
- WO-A1-2009/077341

## Description

La présente invention concerne le transfert de données entre au moins des zones de mémoires d'un système informatique et plus particulièrement un système autorisant des transferts directs de données entre des mémoires de plusieurs éléments de ce système dont un ou plusieurs dispositifs périphériques.

Les systèmes informatiques modernes intègrent fréquemment des mécanismes d'accès direct à une mémoire centrale par des systèmes d'entrée/sortie aussi appelés dispositifs périphériques. Ces mécanismes sont communément appelés des contrôleurs de type DMA (sigle de *Direct Memory Access* en terminologie anglo-saxonne).

Selon ce mode de transmission de données, un dispositif périphérique telle qu'une carte réseau ou une interface de disque dur peut effectuer lui-même un transfert des données entre une mémoire interne à celui-ci et une mémoire centrale située à l'extérieur de celui-ci, sans l'intervention du ou des processeurs, ces derniers se limitant à transmettre une commande de lecture ou d'écriture comprenant une adresse de début de la zone mémoire à transférer et la longueur de cette zone. Le transfert de données peut être réalisé d'une mémoire interne vers une mémoire externe et inversement.

Les contrôleurs de type DMA sont notamment utilisés dans les systèmes informatiques multitâches utilisant des dispositifs périphériques rapides afin de ne pas entraîner de blocage pendant les transferts de données. Ils se comportent comme des initiateurs de requêtes de lecture ou d'écriture pour transférer des données d'une mémoire interne d'un dispositif périphérique vers une mémoire centrale et inversement.

En outre, les contrôleurs de type DMA permettent de protéger la mémoire interne d'un dispositif périphérique en empêchant un accès direct à celle-ci.

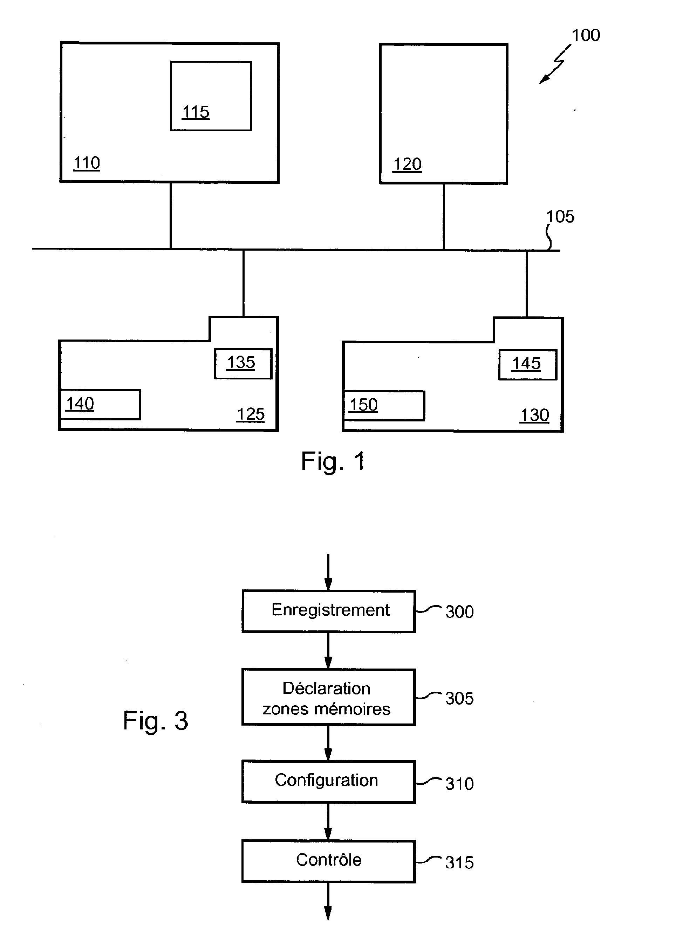

La figure 1 illustre schématiquement un système informatique comprenant deux dispositifs périphériques chacun équipé d'un contrôleur de type DMA.

Comme illustré, le système informatique 100 comprend un bus d'entrée/sortie 105 auquel sont reliées une carte mère 110 intégrant un ou plusieurs processeurs 115, une mémoire centrale 120 et des cartes réseau 125 et 130. Bien qu'illustré de façon simplifiée sur la figure 1, le système informatique 100 comprend non seulement les composants matériels représentés mais également des applications logicielles ainsi que des microprogrammes (appelés *firmwares* en terminologie anglo-saxonne) permettant la mise en oeuvre du système. La carte réseau 125 comprend un contrôleur de type DMA 135 permettant d'échanger des données entre la mémoire centrale 120 et l'interface réseau 140 via le bus 105. De même, la carte réseau 130 comprend un contrôleur de type DMA 145 permettant d'échanger des données entre la mémoire centrale 120 et l'interface 150 via le bus 105.

Ainsi, par exemple, lorsque l'interface réseau 140 reçoit des données depuis le réseau, le contrôleur de type DMA 135 initie une requête d'écriture dans la mémoire 120 pour y transférer les données reçues mémorisées localement dans une mémoire tampon (non représentée). De façon similaire, lorsque le contrôleur de type DMA 135 reçoit une requête de lecture d'un processeur 115 pour transmettre des données via le réseau, il initie une requête de lecture pour lire des données dans la mémoire 120 et les transférer à l'interface 140.

De même, le contrôleur de type DMA 145 permet d'échanger des données entre la mémoire 120 et un réseau auquel est reliée la carte 130.

Cependant, alors que les contrôleurs de type DMA ont prouvé leur efficacité dans de nombreuses architectures, il existe un besoin constant d'améliorer les performances des systèmes informatiques, en particulier des systèmes informatiques de type HPC (sigle d'*High-performance computing* en terminologie anglo-saxonne).

L'invention a ainsi pour objet, en particulier, d'améliorer les systèmes mettant en oeuvre des contrôleurs d'accès direct à une mémoire pour permettre des transferts directs de données entre des mémoires de plusieurs éléments de ce système, notamment entre des mémoires de plusieurs dispositifs périphériques.

L'invention a ainsi pour objet un système informatique comprenant une pluralité de dispositifs périphériques et au moins un commutateur connecté à chaque dispositif de ladite pluralité de dispositifs périphériques, ledit commutateur comprenant des moyens pour transférer une commande à une pluralité d'éléments dudit système informatique, dans lequel,
- au moins un dispositif de ladite pluralité de dispositifs périphériques, appelé au moins un premier dispositif périphérique, comprend des moyens pour initier au moins une commande d'accès direct à une pluralité de zones de mémoire, chacune desdites zones de mémoire étant associée à un élément distinct de ladite pluralité d'éléments ;
- ledit commutateur comprend des moyens pour transmettre au moins une partie de ladite au moins une commande d'accès directe à chaque élément de ladite pluralité d'éléments ;
- au moins un élément de ladite pluralité d'éléments consiste en au moins un dispositif de ladite pluralité de dispositifs périphériques, appelé au moins un second dispositif périphérique, ledit au moins un second dispositif périphérique comprenant les moyens suivants ;
   ○ moyens pour recevoir au moins une commande d'accès direct à une zone d'une mémoire dudit second dispositif périphérique, ladite commande étant reçue dudit au moins un premier dispositif périphérique via ledit commutateur ; et,
   o moyens pour transmettre ladite au moins une commande d'accès direct reçue à un composant dudit second dispositif périphérique,
ledit système permettant audit au moins un premier dispositif périphérique d'effectuer un transfert direct d'au moins une donnée vers ou depuis une mémoire dudit au moins un premier dispositif périphérique depuis ou vers chaque élément de ladite pluralité d'éléments à partir d'une commande unique.

Le système selon l'invention permet ainsi d'effectuer des transferts directs de données entre des mémoires de plusieurs éléments du système, dont un ou plusieurs dispositifs périphériques, afin, de réduire la quantité de mémoire centrale utilisée dans le système informatique, de décharger le processeur central de certaines tâches de transfert de données et de réduire la latence due aux opérations de lecture/écriture. Le système permet en outre de répondre à des besoins de redondance d'équipements, notamment dans des domaines tels que les télécoms ou la finance qui utilisent des équipements de type 5-9, c'est-à-dire des équipements dont la fiabilité calculée est de 99.99999%. Le système selon l'invention permet en outre de multiplier les performances de systèmes en agrégeant des flux de données, par exemple vers des dispositifs graphiques, en particulier dans le domaine HPC et la visualisation, où des flux de calculs peuvent converger vers des mémoires graphiques pour permettre leur traitement.

Selon un mode de réalisation particulier, ledit au moins un premier dispositif comprend des moyens pour effectuer au moins une opération sur au moins une donnée parmi des données reçues de ladite pluralité d'éléments en réponse à la dite au moins une commande. Le système selon l'invention permet ainsi de traiter certaines données lors de leur transfert à des fins d'optimisation. Ces opérations sont, par exemple, des opérations logiques, des opérations mathématiques, des opérations de tri, des opérations de codage ou des opérations d'agrégation.

De façon avantageuse, lesdits moyens pour effectuer ladite au moins une opération comprennent des moyens pour identifier ladite au moins une opération selon au moins une donnée parmi des données reçues de ladite pluralité d'éléments en réponse à la dite au moins une commande pour identifier simplement la ou les opérations à effectuer.

Toujours selon un mode de réalisation particulier, au moins un élément de ladite pluralité d'éléments comprend une mémoire centrale dudit système informatique. Le système selon l'invention permet ainsi un transfert direct de données simultanément vers ou depuis la mémoire centrale ainsi que vers ou depuis un ou plusieurs dispositifs périphériques.

Ledit au moins un second dispositif périphérique comprend en outre, de préférence, des moyens pour contrôler la validité de ladite au moins une partie de ladite au moins une commande afin de protéger la mémoire dudit au moins un second dispositif contre des accès non autorisés.

De façon avantageuse, lesdits moyens de contrôle comprennent des moyens pour comparer un identifiant de l'émetteur de ladite au moins une commande d'accès direct avec au moins un identifiant prédéterminé. Ainsi, seuls les dispositifs périphériques autorisés peuvent accéder directement à une mémoire dudit au moins un second dispositif périphérique.

Toujours de façon avantageuse, lesdits moyens de contrôle comprennent des moyens pour comparer ladite zone d'une mémoire dudit second dispositif périphérique avec au moins une zone mémoire prédéterminée. Ainsi, il est possible de protéger des zones de mémoire dudit au moins un second dispositif périphérique afin qu'aucun ou que seulement certains dispositifs périphériques puissent y accéder.

Selon un mode de réalisation particulier, lesdits moyens dudit au moins un second dispositif pour transmettre ladite au moins une commande d'accès direct reçue à un composant dudit second dispositif périphérique comprennent des moyens pour effectuer au moins une opération sur au moins une donnée reçue. Le système selon l'invention permet ainsi de traiter certaines données lors de leur transfert à des fins d'optimisation.

Toujours selon un mode de réalisation particulier, ledit au moins un premier dispositif périphérique comprend en outre des moyens pour identifier ledit au moins un second dispositif périphérique et des moyens pour transmettre une commande d'accès direct à une zone d'une mémoire dudit second dispositif lorsque la mémoire visée par la commande d'accès direct issue desdits moyens d'initiation appartient audit au moins un second dispositif périphérique. Ledit au moins un premier dispositif périphérique peut ainsi identifier ledit au moins un second dispositif périphérique et initier un transfert direct de données entre une mémoire dudit au moins un premier dispositif périphérique et au moins une mémoire dudit au moins un second dispositif périphérique.

D'autres avantages, buts et caractéristiques de la présente invention ressortent de la description détaillée qui suit, faite à titre d'exemple non limitatif, au regard des dessins annexés dans lesquels:
- la figure 1 illustre schématiquement un système informatique comprenant deux dispositifs périphériques chacun équipé d'un contrôleur de type DMA ;
- la figure 2 illustre schématiquement certains éléments d'un système informatique dans lequel l'invention peut être mise en oeuvre ;
- la figure 3 illustre schématiquement des phases mises en oeuvre dans un contrôleur de type DMA d'un dispositif périphérique particulier pour permettre le transfert direct de données entre dispositifs périphériques ;
- la figure 4 illustre schématiquement certaines étapes mises en oeuvre dans un contrôleur de type DMA conforme à l'invention pour transférer directement des données entre plusieurs dispositifs périphériques ;
- la figure 5 illustre un système informatique adapté à mettre en oeuvre des transferts de données en mode multipoint ; et,
- la figure 6, comprenant les figures 6a à 6g, présente des exemples de transmissions directes de données entre plusieurs dispositifs périphériques, durant lesquelles des opérations peuvent être effectuées sur les données transférées.

De façon générale, l'invention vise à permettre la transmission directe de données entre des mémoires de dispositifs périphériques pourvus de contrôleurs de type DMA sans nécessiter d'étapes d'écriture suivie d'étapes de lecture dans une mémoire centrale. En d'autres termes, l'invention permet la mise en oeuvre d'un mécanisme de dialogue entre des contrôleurs de type DMA leur permettant d'effectuer des transactions pour lesquelles un contrôleur de type DMA est l'initiateur et au moins un autre contrôleur de type DMA se comporte comme une cible tout en effectuant la partie finale du transfert de données vers l'intérieur du dispositif périphérique considéré.

Ainsi, à titre d'illustration et en référence à la figure 1, des données reçues par l'interface réseau 140 de la carte réseau 125 peuvent être transférées directement dans l'interface 150 de la carte 130 sans utiliser la mémoire centrale 120.

Une communication directe entre plusieurs dispositifs périphériques présente notamment de nombreux avantages dans le cadre du calcul scientifique haute performance, en particulier entre cartes graphiques ou GPUs (sigle de *Graphics Processing Unit* en terminologie anglo-saxonne) et cartes Infiniband, entre cartes Infiniband et cartes Ethernet et entre cartes Infiniband.

En particulier, il est observé qu'un nombre croissant de centres de calcul utilisent des cartes graphiques afin d'effectuer des calculs qui étaient traditionnellement effectués par des unités de calcul des noeuds, la puissance supérieure des cartes graphiques permettant de diminuer l'empreinte au sol du système. Afin de paralléliser les calculs, un réseau d'interconnexion est nécessaire. En permettant un transfert direct des données du réseau vers des cartes graphiques et inversement, sans nécessiter de mémoire centrale, les noeuds mis en oeuvre requièrent moins de mémoire, ce qui permet de diminuer la consommation électrique tout en diminuant le coût global du calculateur Il en va de même pour le transfert de données entre des réseaux internes et externes. En outre, le transfert direct de données permet de l'affranchir de problèmes d'accès mémoire non uniforme et de localisation fréquemment rencontrés.

La mise en oeuvre de l'invention est liée, en particulier, à l'architecture des bus de transferts utilisés entre les dispositifs périphériques et à l'architecture mémoire des différents dispositifs impliqués. Elle peut être réalisée au niveau du matériel ou au niveau du logiciel embarqué dans le dispositif, de préférence à l'aide d'un protocole prédéterminé permettant, avantageusement, de mettre en oeuvre les fonctions suivantes,
- l'identification d'un dispositif périphérique comprenant un contrôleur de type DMA capable d'initier un transfert direct de données entre contrôleurs de type DMA et se comporter comme une cible pour effectuer la partie finale d'un transfert de données ;
- la déclaration de zones de mémoire pouvant être utilisées pour transférer directement des données entre contrôleurs de type DMA, c'est-à-dire de zones de mémoire contrôlées par un contrôleur de type DMA et accessibles par d'autres contrôleurs de type DMA ;
- la définition de règles de transfert de données d'une mémoire d'un dispositif périphérique comprenant un contrôleur de type DMA capable de mettre en oeuvre l'invention à d'autres similaires, notamment de règles de transferts de données directs ou programmés ; et,
- le contrôle de dispositifs périphériques comprenant un contrôleur de type DMA capable de mettre en oeuvre l'invention pour permettre d'automatiser le transfert de données mémorisées dans une mémoire d'un tel dispositif à d'autres similaires.

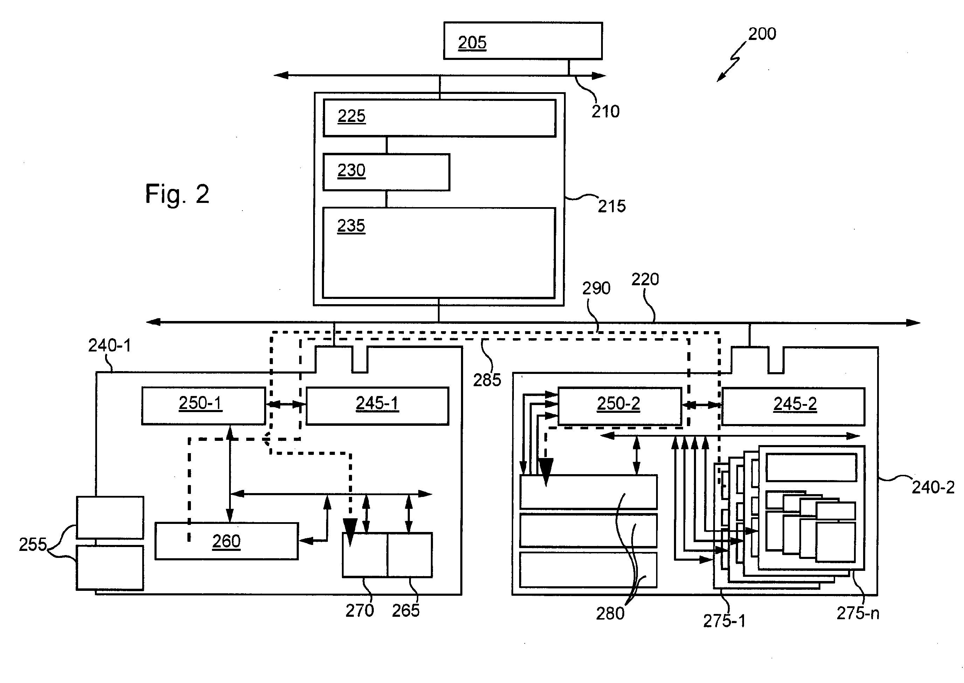

La figure 2 illustre schématiquement certains éléments d'un système informatique 200 dans lequel l'invention peut être mise en oeuvre. Le système comprend ici une mémoire centrale 205 reliée à un bus système 210 appelé *host CPU bus* auquel est également relié le contrôleur de bus 215. Ce dernier a notamment pour objet de convertir et transférer des informations du bus système 210 à un bus périphérique 220. A ces fins, le contrôleur de bus 215 comprend une interface 225 de bus système, une interface 230 de données et une interface 235 de bus périphérique.

Le système informatique 200 comprend en outre deux dispositifs périphériques 240-1 et 240-2 connectés au bus périphérique 220.

Le dispositif périphérique 240-1 est ici une carte réseau, par exemple une carte Ethernet. Il comprend une interface 245-1 de bus périphérique et une unité de traitement 250-1 associée pour traiter les paquets de données échangés via cette interface de bus périphérique. Il comprend en outre une interface réseau 255 et une unité de traitement 260 associée pour traiter les paquets de données échangés via cette interface réseau. Par ailleurs, le dispositif périphérique 240-1 comprend une unité de calcul 265 (ou CPU, sigle de *Central Processing Unit* en terminologie anglo-saxonne) et une mémoire locale 270, par exemple de type SRAM (acronyme de *Static Random Access Memory* en terminologie anglo-saxonne).

De façon similaire, le dispositif périphérique 240-2, ici une carte graphique, comprend une interface 245-2 de bus périphérique et une unité de traitement 250-2 associée pour traiter les paquets de données échangés via cette interface de bus périphérique. Ce dispositif comprend en outre une pluralité d'unités de calcul 275-1 à 275-n comprenant chacune une mémoire partagée, une mémoire locale et une unité élémentaire de calcul. Ce dispositif comprend également des mémoires 280 communes à toutes les unités de calcul, par exemple une mémoire globale et une mémoire de texture.

Les interfaces 245-1 et 245-2 intègrent un contrôleur de type DMA permettant des transferts directs de données entre la mémoire centrale 205 via le contrôleur de bus 215 et une mémoire interne des dispositifs périphériques 240-1 et 240-2 et inversement.

Ces contrôleurs de type DMA intègrent en outre des fonctions permettant de transférer directement des données entre des mémoires internes de ces dispositifs. A titre d'illustration, il est possible de transférer des données d'une mémoire tampon de l'unité de traitement 260 du dispositif 240-1 vers une mémoire 280 du dispositif 240-2 comme illustré par la flèche 285. De même, il est possible de transférer des données d'une mémoire partagée d'une unité de calcul 275-i du dispositif 240-2 vers la mémoire locale 270 du dispositif 240-1 comme illustré par la flèche 290.

A ces fins et comme décrit précédemment, les contrôleurs de type DMA comprennent ici des fonctions d'identification, de déclaration, de configuration et de contrôle.

La figure 3 illustre schématiquement un exemple d'enchaînement des phases mises en oeuvre dans un tel contrôleur de type DMA d'un dispositif périphérique particulier. Il est observé ici que les phases représentées sur la figure 3 ne sont pas nécessairement exécutées de façon séquentielle et qu'elles peuvent être exécutées dans un ordre différent de celui représenté. En particulier, la phase de contrôle peut suivre la phase d'enregistrement.

Une première phase (phase 300) a pour objet l'enregistrement du dispositif périphérique afin que celui-ci soit identifiable par les autres dispositifs qui lui sont directement reliés. Cet enregistrement peut, par exemple, être effectué auprès d'un annuaire commun. Cette phase peut notamment être automatiquement exécutée lorsque le dispositif est activé. La phase d'enregistrement comprend en outre, de préférence, une étape de description du dispositif afin, notamment, d'en définir le type. Il est observé ici que le type peut être défini de façon similaire au typage mis en oeuvre dans le standard PCI-E (sigle de *Peripheral Component Interconnect Express* en terminologie anglo-saxonne). Cette description peut également définir d'autres caractéristiques propres au dispositif périphérique, notamment les caractéristiques suivantes données à titre d'illustration,
- une capacité de mémoire interne du dispositif ;
- un crédit pour contrôler un flux de données afin d'éviter un trafic inutile (l'émission de chaque commande d'accès à une mémoire externe utilise une unité de crédit qui est à nouveau disponible lorsqu'un accusé réception est reçu en réponse à la commande) ;
- une indication de sécurité pour protéger l'accès aux données d'une mémoire interne du dispositif, en écriture et/ou en lecture, par exemple selon un mécanisme de clé de codage ;
- une indication de vérification d'intégrité pour préciser si les données échangées comprennent des données de vérification telles que des CRC (sigle de *Cyclic Redundancy Check* en terminologie anglo-saxonne) ;
- une vitesse de consommation des données mémorisées dans une mémoire interne du dispositif. Cette indication permet notamment de vérifier la compatibilité de deux dispositifs périphériques mettant en oeuvre des contrôleurs de type DMA mettant en oeuvre l'invention ; et,
- la liste des opérations supportées par le dispositif.

Cette phase peut également être utilisée pour identifier d'autres dispositifs périphériques reliés au même bus que le dispositif considéré, notamment des dispositifs comprenant un contrôleur de type DMA conforme à l'invention, afin d'établir la liste des dispositifs périphériques avec lesquels le dispositif considéré peut échanger directement des données.

Après s'être enregistré, le contrôleur DMA du dispositif peut initier une phase de déclaration de zones mémoires (phase 305). Une fonction mise en oeuvre dans cette phase vise notamment la déclaration des zones de mémoire interne du dispositif dans lesquelles d'autres dispositifs peuvent lire et/ou écrire des données, éventuellement sous certaines conditions. De façon avantageuse, une telle déclaration est effectuée auprès de l'annuaire commun utilisé pour identifier les dispositifs périphériques reliés à un même bus.

Durant cette phase, il est également possible de mettre en oeuvre des fonctions du contrôleur de type DMA pour rechercher dans un annuaire commun des plages mémoires préalablement déclarées par d'autres dispositifs périphériques. En outre, des outils permettant d'établir des correspondances entre des zones de mémoire interne du dispositif et des zones de mémoire interne d'autres dispositifs peuvent être mis en oeuvre pour établir des liens sources/destinations.

Dans une phase suivante (phase 310), le dispositif peut être configuré pour permettre le transfert direct de données vers ou depuis d'autres dispositifs périphériques, c'est-à-dire pour poser des règles de transfert de données. Durant cette phase, une étape d'évaluation est avantageusement mise en oeuvre dans une période de test pour évaluer la compatibilité, notamment en terme de services et de vitesse, du dispositif considéré avec d'autres dispositifs périphériques qui lui sont reliés.

Cette phase vise également à créer des primitives pour le transfert en mode point à point en spécifiant les dispositifs mis en oeuvre, les zones de mémoire concernées et les éventuels paramètres de transmission de données tels la sécurité et le contrôle d'intégrité. Il est observé ici que la création de primitives a pour objet la définition de commande de lecture et/ou d'écriture mais pas leur exécution qui est réalisée lorsque des conditions sont remplies par exemple lorsqu'une donnée est écrite en mémoire interne ou sur requête d'un utilisateur ou d'une application.

A titre d'illustration, une telle primitive peut viser, en référence au dispositif 240-2 de la figure 2, une commande d'écriture de données provenant d'une mémoire partagée d'une unité de calcul 275-i vers la mémoire locale 270 du dispositif 240-1 (flèche 290). Il peut également s'agir d'une commande de lecture de données d'une mémoire tampon de l'unité de traitement 260 du dispositif 240-1 vers une mémoire 280 (flèche 285).

A titre d'illustration, elles peuvent être représentées sous la forme suivante,

### lecture(source, destination, longueur, paramètres)

où les indications de source et de destination comprennent les identifiants des dispositifs périphériques et des mémoires considérés ainsi que les zones mémoires visées, la longueur indique la quantité de données à transférer et les paramètres concernent les paramètres devant être utilisés liés, par exemple, à la sécurité, au contrôle des données et à l'exécution de la commande correspondant à la primitive.

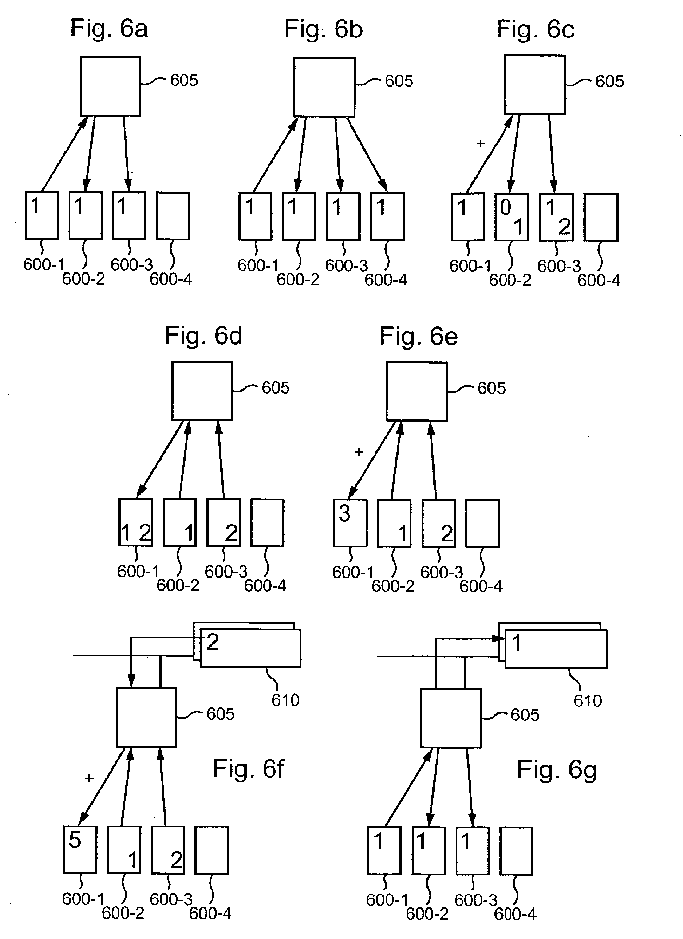

Des primitives peuvent également être créées pour la transmission de données dans un mode collectif de type multicast ou broadcast qui permet de transférer des données d'une source commune vers plusieurs dispositifs différents comme décrit ci-après, notamment en référence à la figure 6. Un tel mode de transfert est particulièrement utile lorsque des dispositifs sont dupliqués pour augmenter la fiabilité du système informatique.

Elles peuvent aussi comprendre des opérations de groupage ou de dégroupage de données provenant ou à destination de mémoires de plusieurs dispositifs périphériques permettant d'améliorer les performances du système informatique. De telles opérations peuvent être considérées comme des extensions des opérations connues sous le nom de *scatter* et *gather* en terminologie anglo-saxonne selon lesquelles des contrôleurs de type DMA sont capables de regrouper des données issues d'une mémoire pour faire un seul échange d'une quantité importante de données.

L'exécution des commandes correspondant à ces primitives peut être explicite (selon des commandes des utilisateurs ou du noyau du système d'exploitation), prédéterminée selon des événements (par exemple une donnée peut faire l'objet d'une commande d'écriture lors de sa réception en mémoire) ou périodique (les transferts sont planifiés, c'est-à-dire que le contenu de la mémoire est transféré, en totalité ou en partie, selon des cycles temporels déterminés).

Enfin, une phase de contrôle peut être mise en oeuvre (phase 315) pour permettre à un utilisateur d'accéder au dispositif périphérique. Cet accès est, de préférence, réalisé à travers une interface. Il permet ici d'obtenir la version et les capacités d'un dispositif ainsi que de le configurer. Il permet également de déclarer des zones d'une mémoire interne du dispositif accessibles à d'autres dispositifs et/ou de définir des règles sur de telles zones de mémoire pour indiquer, par exemple, qui peut accéder à ces zones avec quelles opérations et selon quels modes de transfert.

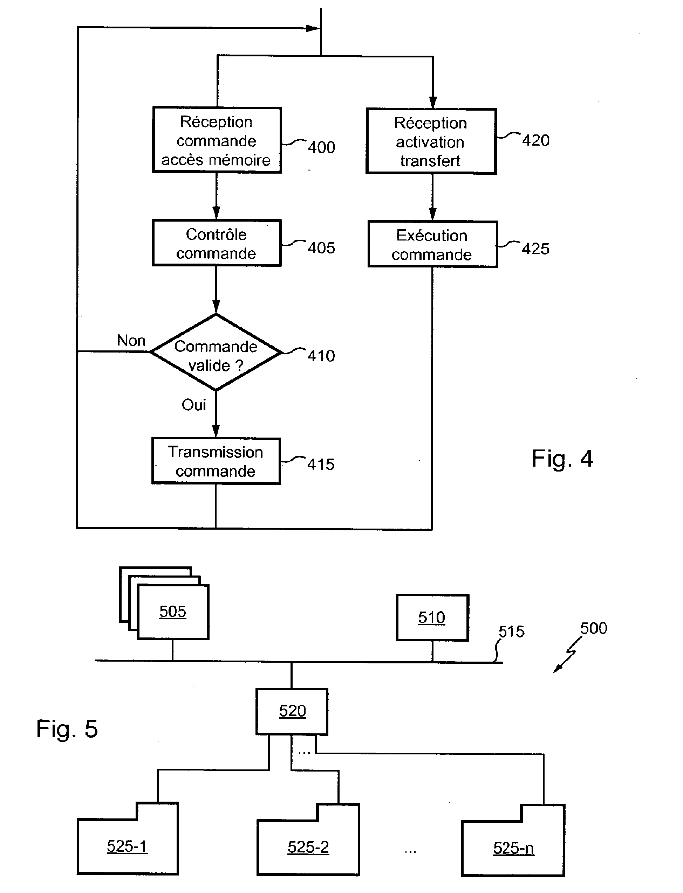

La figure 4 illustre schématiquement certaines étapes mises en oeuvre dans un contrôleur de type DMA conforme à l'invention pour transférer directement des données entre plusieurs dispositifs périphériques.

Après avoir reçu une commande d'accès à une mémoire interne du dispositif comprenant le contrôleur de type DMA (étape 400), par exemple une commande de lecture ou d'écriture, un contrôle de la commande reçue est, de préférence, effectué (étape 405). Un tel contrôle a notamment pour objet de protéger la mémoire interne du dispositif ayant reçu la commande. Comme indiqué précédemment, un tel contrôle peut notamment viser l'initiateur de la commande et la zone mémoire faisant l'objet de la commande. Un test est alors effectué (étape 410) pour déterminer si la commande est valide, c'est-à-dire ici si l'initiateur de la commande a le droit d'accéder à la mémoire interne du dispositif ayant reçu la commande et plus particulièrement à la zone de la mémoire spécifiée dans la commande.

Si la commande n'est pas valide, la commande est rejetée. Un message d'erreur peut alors être adressé à l'initiateur de la requête (non représenté). Si, au contraire, la commande est valide, elle est transmise à un autre composant du dispositif comprenant le contrôleur de type DMA ayant reçu la commande (étape 415), typiquement à un contrôleur de mémoire. La commande est alors exécutée de façon standard.

Parallèlement, lorsque le contrôleur de type DMA reçoit une notification d'activation de transfert de données (étape 420), il exécute la commande correspondante de façon standard. La notification d'activation de transfert de données peut être reçue d'un composant du dispositif comprenant le contrôleur DMA, par exemple d'une interface réseau, ou d'un élément externe, en particulier de processeurs du système central du système informatique. Il est observé que le transfert peut viser ici une commande de lecture ou d'écriture depuis ou vers la mémoire centrale du système informatique mais également depuis ou vers un ou plusieurs dispositifs périphériques qui mettent alors en oeuvre des étapes similaires aux étapes 400 à 415 décrites précédemment.

En d'autres termes, le contrôleur de type DMA a ici une double fonction de contrôleur de type DMA classique (étapes 420 et 425) et de pont permettant de transférer une commande d'un dispositif périphérique externe vers un composant interne du dispositif périphérique comprenant le contrôleur de type DMA qui simule ainsi un comportement d'un contrôleur de mémoire vis-à-vis du dispositif périphérique externe (étapes 400 à 415).

Comme indiqué précédemment, les contrôleurs de type DMA adaptés à mettre en oeuvre l'invention peuvent être utilisés pour des transferts collectifs, c'est-à-dire des transferts de données multipoints.

La figure 5 illustre un système informatique 500 adapté à mettre en oeuvre des transferts directs de données en mode multipoint. Le système informatique 500 comprend ici des processeurs 505 et une mémoire centrale 510 reliés par un bus système 515. Le système 500 comprend en outre un commutateur de bus 520 également relié au bus système 515 ainsi qu'une pluralité de dispositifs périphériques 525-1 à 525-n.

Le commutateur de bus 520 est, par exemple, un commutateur PCI-E qui est connecté aux dispositifs 525-1 à 525-n en mode point à point, indépendamment, selon un lien à double sens (appelé *full-duplex* en terminologie anglo-saxonne), en attribuant des largeurs de bus en fonction des échanges qui sont initiés par les contrôleurs DMA des dispositifs périphériques.

Il est observé ici que la norme PCI-SIG prévoit dans une spécification la possibilité de faire des échanges PCI-E de type multicast en implémentant un protocole adapté dans le contrôleur DMA d'un commutateur PCI-E pour permettre des transferts directs de données entre la mémoire centrale et des dispositifs périphériques groupés sous forme de groupe multicast (ou *multicast group* en terminologie anglo-saxonne).

Il existe par exemple des commutateurs PCI-E à 16 voies qui comprennent jusqu'à 4 contrôleurs de type DMA pour effectuer des transferts directs de données selon des descripteurs spécialement dédiés à l'échange multicast. Ces descripteurs indiquent une source commune pour chacun des contrôleurs de type multicast qui visent des cibles différentes, permettant ainsi de multiples échanges. Ces descripteurs peuvent également indiquer si des interruptions doivent être générées pour chaque contrôleur de type DMA ou seulement à la fin du transfert multicast.

De tels commutateurs peuvent être utilisés pour mettre en oeuvre l'invention comme décrit précédemment et permettre ainsi le transfert direct de données entre des dispositifs périphériques groupés sous forme de groupe multicast, chacun de ces dispositifs comprenant un contrôleur de type DMA mettant en oeuvre les fonctions décrites précédemment.

Ils permettent ainsi des échanges de données à partir de primitives de transferts collectifs, c'est-à-dire dans un dialogue à (n+1) participants.

Plusieurs opérations sont possibles entre dispositifs périphériques pourvus de contrôleurs de type DMA conformes aux spécifications décrites précédemment et entre dispositifs périphériques pourvus de contrôleurs de type DMA conformes aux spécifications décrites précédemment et la mémoire centrale.

Des exemples de telles opérations sont illustrés en référence à la figure 6, comprenant les figures 6a à 6g.

Les dispositifs périphériques représentés 600-1 à 600-4 comprennent chacun un contrôleur de type DMA conformes aux spécifications décrites précédemment. Chacun de ces dispositifs est ici relié à un commutateur 605 adapté à gérer des transferts collectifs (multicast et broadcast).

La figure 6a illustre une transmission de type multicast du dispositif 600-1 vers les dispositifs 600-2 et 600-3. La diffusion de données est ainsi réalisée à partir d'une source vers plusieurs cibles du groupe multicast auquel appartient le dispositif 600-1. Il s'agit d'une communication de type 1 vers n initiée par le dispositif comprenant la donnée transférée.

La figure 6b illustre une transmission de type broadcast du dispositif 600-1 vers les dispositifs 600-2, 600-3 et 600-4. La diffusion de données est ainsi réalisée à partir d'une source vers toutes les cibles du groupe multicast auquel appartient le dispositif 600-1. Il s'agit d'une communication de type 1 vers tous initiée par le dispositif comprenant la donnée transférée.

La figure 6c illustre une transmission de type multicast calculé du dispositif 600-1 vers les dispositifs 600-2, 600-3 et 600-4. La diffusion de données est ainsi réalisée à partir d'une source vers toutes les cibles du groupe multicast auquel appartient le dispositif 600-1. En outre, une opération est effectuée sur les données transférées, par exemple une opération logique telle qu'un « ou », un « et » ou un « ou exclusif », une opération mathématique telle qu'une addition ou une multiplication ou une opération définie par le dispositif telle qu'un tri de données ou leur cryptage. L'opération effectuée ici est une addition entre la donnée transférée et une donnée présente dans le dispositif cible. La transmission est initiée par le dispositif comprenant la donnée transférée.

La figure 6d illustre une transmission de type agrégation de données des dispositifs 600-2 et 600-3 vers le dispositif 600-1. Il s'agit d'une opération permettant, à partir de plusieurs sources, de transmettre des données à une ou plusieurs cibles en agrégeant les données transmises. La transmission est initiée par le dispositif recevant les données transférées.

La figure 6e illustre une transmission de type agrégation calculée de données des dispositifs 600-2 et 600-3 vers le dispositif 600-1. Il s'agit d'une opération permettant, à partir de plusieurs sources, de transmettre des données à une cible en effectuant un calcul sur les données transmises. Il s'agit ici d'une addition entre les données reçues des sources utilisées. La transmission est initiée par le dispositif recevant les données transférées. Naturellement d'autres types d'opérations peuvent être mis en oeuvre.

La figure 6f illustre une transmission de type agrégation calculée de données des dispositifs 600-2 et 600-3 et de la mémoire centrale 610 vers le dispositif 600-1. Il s'agit d'une opération permettant, à partir de plusieurs sources, de transmettre des données à une cible en effectuant un calcul sur les données transmises. Il s'agit ici d'une addition entre les données reçues des sources utilisées. La transmission est initiée par le dispositif recevant les données transférées. D'autres types d'opérations peuvent également être mis en oeuvre.

La figure 6g illustre une transmission de type multicast du dispositif 600-1 vers les dispositifs 600-2 et 600-3 et la mémoire centrale 610. La diffusion de données est ainsi réalisée à partir d'une source vers plusieurs cibles du groupe multicast auquel appartient le dispositif 600-1. Il s'agit d'une communication de type 1 vers n. La transmission est initiée par le dispositif comprenant la donnée transférée.

Il est ainsi notamment possible d'effectuer les opérations suivantes lors de la transmission direct et collective de données,
- diffusion : des données issues d'une source sont transmises vers plusieurs ou tous les autres dispositifs périphériques appartenant à un même groupe et, éventuellement, vers la mémoire centrale ;
- diffusion avec opération : des données issues d'une source sont transmises vers plusieurs ou tous les autres dispositifs périphériques appartenant à un même groupe et, éventuellement, vers la mémoire centrale en effectuant des opérations sur ces données, notamment des opérations de type logique telles qu'un « ou », un « et » et un « ou exclusif », des opérations mathématiques telles que des additions et des multiplications et des opérations définies par le ou les dispositifs cibles telles qu'un tri des données ou leur cryptage ;
- agrégation : des données issues de plusieurs sources sont agrégées et transmises vers un, plusieurs ou tous les autres dispositifs périphériques appartenant à un même groupe et, éventuellement, vers la mémoire centrale ; et,
- agrégation avec opérations: des opérations sont effectuées sur des données issues de plusieurs sources, les résultats de ces opérations étant transmis vers un, plusieurs ou tous les autres dispositifs périphériques appartenant à un même groupe et, éventuellement, vers la mémoire centrale. De telles opérations sont notamment des opérations de type logique telles qu'un « ou », un « et » et un « ou exclusif », des opérations mathématiques telles que des additions et des multiplications et des opérations définies par le ou les dispositifs cibles telles qu'un tri des données ou leur cryptage.

Selon un mode de réalisation particulier, le choix de l'opération devant être effectuée dépend de certaines des données reçues en réponse à une commande de lecture de données.

Des transferts directs de données entre plusieurs dispositifs périphériques, ou transferts collectifs, peuvent être mis en oeuvre à l'aide de primitives de transferts collectifs déterminées dans au moins un des dispositifs périphériques.

Cette mise en oeuvre est similaire à celle décrite précédemment. Elle comprend des phases d'identification, de déclaration, de configuration et de contrôle. Les paramètres des primitives de transferts collectifs sont, de préférence, similaires à ceux des primitives utilisées pour effectuer un transfert direct de données entre des mémoires de deux dispositifs périphériques comme décrit précédemment. Cependant, ils comprennent en outre des caractéristiques propres liées notamment aux opérations de combinaison de données.

Un exemple d'une telle primitive de transfert collectif peut être représenté sous la forme suivante,
*lecture(source_1*, *destination_1, longueur_1,* ..., *source_n, destination_n, longueur_n, paramètres)*
où,
- *source_i* et *destination_i* comprennent les identifiants des dispositifs périphériques et des mémoires considérés ainsi que les zones mémoires visées. Selon la nature de la primitive, toutes les sources ou toutes les destinations visent un même dispositif et des zones de mémoire identiques ou distinctes de telle sorte qu'une même donnée puisse être transférée vers plusieurs dispositifs et que des données provenant de différents dispositifs puissent être transférées dans différentes zones de mémoire d'un dispositif ou dans une même zone après qu'une opération ait été effectuée ;
- *longueur_i* indique la quantité de données à transférer de la *source_i i* à *destination_i ;* et,
- *paramètres* précisent les paramètres devant être utilisés liés, par exemple, à la sécurité, au contrôle des données, aux opérations devant être effectuées et à l'exécution de la commande correspondant à la primitive.

Lorsque des opérations particulières doivent être effectuées sur des données transférées, elles sont effectuées par le dispositif ayant initié la commande lors de l'étape 425 illustrée sur la figure 4 ou par un dispositif ayant reçu la commande lors de l'étape 415 illustrée sur la figure 4 selon les informations de la primitive à l'origine de la commande d'accès direct.

Ainsi, par exemple, en référence à la figure 6e, après avoir initié une commande pour accéder à des données mémorisées dans les dispositifs 600-2 et 600-3, le dispositif 600-1 attend de recevoir les données transférées puis effectue l'opération précisée dans la primitive. L'étape 425 décrite précédemment comprend alors une étape pour initier la commande d'accès direct à la mémoire d'autres dispositifs, une étape de synchronisation pour obtenir les données attendues et une étape visant l'exécution des opérations précisées dans la primitive liée au transfert activé.

De façon similaire, en référence, par exemple, à la figure 6c, lorsqu'une commande d'accès direct est initiée selon une primitive indiquant l'exécution d'une opération dans un autre dispositif, distinct du dispositif à l'origine de cette commande, une indication relative aux opérations à effectuer est ajoutée à la commande d'accès direct transmise à cet autre dispositif. Lorsqu'une telle commande est reçue par un contrôleur de type DMA et qu'elle est valide, les opérations à effectuer sont identifiées par le DMA selon les indications reçues. Il initie alors leur exécution avant de transmettre la commande pour qu'elle soit exécutée au cours de l'étape 415.

Naturellement, pour satisfaire des besoins spécifiques, une personne compétente dans le domaine de l'invention pourra appliquer des modifications dans la description précédente.

## Revendications

1. Système informatique comprenant une pluralité de dispositifs périphériques (600) et au moins un commutateur (605) connecté à chaque dispositif de ladite pluralité de dispositifs périphériques, ledit commutateur comprenant des moyens pour transférer une commande à une pluralité d'éléments dudit système informatique, ce système étant **caractérisé en ce que**,
- au moins un dispositif de ladite pluralité de dispositifs périphériques, appelé au moins un premier dispositif périphérique, comprend des moyens pour initier (425) au moins une commande d'accès direct à une pluralité de zones de mémoire, chacune desdites zones de mémoire étant associée à un élément distinct de ladite pluralité d'éléments ;
- ledit commutateur comprend des moyens pour transmettre au moins une partie de ladite au moins une commande d'accès direct à chaque élément de ladite pluralité d'éléments ;
- au moins un élément de ladite pluralité d'éléments consiste en au moins un dispositif de ladite pluralité de dispositifs périphériques, appelé au moins un second dispositif périphérique, ledit au moins un second dispositif périphérique comprenant les moyens suivants ;
o moyens pour recevoir (400) au moins une commande d'accès direct à une zone d'une mémoire dudit second dispositif périphérique, ladite commande étant reçue dudit au moins un premier dispositif périphérique via ledit commutateur ; et,
o moyens pour transmettre (415) ladite au moins une commande d'accès direct reçue à un composant dudit second dispositif périphérique,
ledit système permettant audit au moins un premier dispositif périphérique d'effectuer un transfert direct d'au moins une donnée vers ou depuis une mémoire dudit au moins un premier dispositif périphérique depuis ou vers chaque élément de ladite pluralité d'éléments à partir d'une commande unique.

2. Système selon la revendication précédente selon lequel ledit au moins un premier dispositif comprend des moyens pour effectuer au moins une opération sur au moins une donnée parmi des données reçues de ladite pluralité d'éléments en réponse à la dite au moins une commande.

3. Système selon la revendication précédente selon lequel ladite au moins une opération comprend au moins une opération parmi des opérations logiques, des opérations mathématiques, des opérations de tri, des opérations de codage et des opérations d'agrégation.

4. Système selon la revendication 2 ou la revendication 3 selon lequel lesdits moyens pour effectuer ladite au moins une opération comprennent des moyens pour identifier ladite au moins une opération selon au moins une donnée parmi des données reçues de ladite pluralité d'éléments en réponse à la dite au moins une commande.

5. Système selon l'une quelconque des revendications précédentes selon lequel au moins un élément de ladite pluralité d'éléments comprend une mémoire centrale (610) dudit système informatique.

6. Système selon l'une quelconque des revendications précédentes selon lequel ledit au moins un second dispositif périphérique comprend en outre des moyens pour contrôler la validité de ladite au moins une partie de ladite au moins une commande.

7. Système selon la revendication précédente selon lequel lesdits moyens de contrôle comprennent des moyens pour comparer un identifiant de l'émetteur de ladite au moins une commande d'accès direct avec au moins un identifiant prédéterminé.

8. Système selon la revendication 6 ou la revendication 7 selon lequel lesdits moyens de contrôle comprennent des moyens pour comparer ladite zone d'une mémoire dudit second dispositif périphérique avec au moins une zone mémoire prédéterminée.

9. Système selon l'une quelconque des revendications précédentes selon lequel lesdits moyens dudit au moins un second dispositif pour transmettre ladite au moins une commande d'accès direct reçue à un composant dudit second dispositif périphérique comprennent des moyens pour effectuer au moins une opération sur au moins une donnée reçue.

10. Système selon l'une quelconque des revendications précédentes selon lequel ledit au moins un premier dispositif périphérique comprend en outre des moyens pour identifier ledit au moins un second dispositif périphérique et des moyens pour transmettre une commande d'accès direct à une zone d'une mémoire dudit second dispositif lorsque la mémoire visée par la commande d'accès direct issue desdits moyens d'initiation appartient audit au moins un second dispositif périphérique.

## Patentansprüche

1. Computersystem mit einer Mehrzahl von peripheren Vorrichtungen (600) und zumindest einem Schalter (605), der mit jeder Vorrichtung aus der Mehrzahl von peripheren Vorrichtungen verbunden ist, wobei der Schalter Mittel zum Übertragen eines Befehls an eine Mehrzahl von Elementen des Computersystems enthält, wobei dieses System **dadurch gekennzeichnet ist, dass**
- zumindest eine Vorrichtung aus der Mehrzahl von peripheren Vorrichtungen, die sogenannte zumindest eine erste periphere Vorrichtung, Mittel zum Initiieren (425) zumindest eines Befehls zum direkten Zugriff auf eine Mehrzahl von Speicherbereichen enthält, wobei jedem der Speicherbereiche ein Element zugeordnet ist, das sich von der Mehrzahl von Elementen unterscheidet;
- der Schalter Mittel zum Übertragen zumindest eines Teils des zumindest einen Befehls zum direkten Zugriff an jedes Element der Mehrzahl von Elementen enthält;
- zumindest ein Element aus der Mehrzahl von Elementen aus zumindest einer Vorrichtung der Mehrzahl von peripheren Vorrichtungen besteht, die sogenannte zumindest eine zweite periphere Vorrichtung, wobei die zumindest eine zweite periphere Vorrichtung die nachfolgenden Mittel enthält:
• Mittel zum Empfangen (400) von zumindest einem Befehl zum direkten Zugriff auf einen Bereich eines Speichers der zweiten peripheren Vorrichtung, wobei der Befehl von der zumindest einen ersten peripheren Vorrichtung über den Schalter empfangen wird; und
• Mittel zum Übertragen (415) des zumindest einen empfangenen Befehls zum direkten Zugriff an eine Komponente der zweiten peripheren Vorrichtung,
wobei das System der zumindest einen ersten peripheren Vorrichtung gestattet, eine direkte Übertragung von zumindest einer Datenangabe zu oder von einem Speicher der zumindest einen ersten peripheren Vorrichtung von oder zu jedem Element aus der Mehrzahl von Elementen ausgehend von einem einzigen Befehl durchzuführen.

2. System nach dem vorangehenden Anspruch, wobei die zumindest eine erste Vorrichtung Mittel zum Durchführen zumindest einer Operation an zumindest einer Datenangabe aus Daten enthält, die von der Mehrzahl von Elementen in Antwort auf den zumindest einen Befehl empfangen wurden.

3. System nach dem vorangehenden Anspruch, wobei die zumindest eine Operation zumindest eine Operation aus logischen Operationen, mathematischen Operationen, Sortieroperationen, Codierungsoperationen und Aggregationsoperationen umfasst.

4. System nach Anspruch 2 oder Anspruch 3, wobei die Mittel zum Durchführen der zumindest einen Operation Mittel zum Identifizieren der zumindest einen Operation nach zumindest einer Datenangabe aus Daten enthalten, die von der Mehrzahl an Elementen in Antwort auf den zumindest einen Befehl empfangenen wurden.

5. System nach einem der vorangehenden Ansprüche, wobei zumindest ein Element aus der Mehrzahl von Elementen einen Zentralspeicher (610) des Computersystems aufweist.

6. System nach einem der vorangehenden Ansprüche, wobei zumindest eine zweite periphere Vorrichtung ferner Mittel zum Kontrollieren der Gültigkeit des zumindest einen Teils des zumindest einen Befehls enthält.

7. System nach dem vorangehenden Anspruch, wobei die Kontrollmittel Mittel zum Vergleichen einer Identifizierung des Senders des zumindest einen Befehls zum direkten Zugriff mit zumindest einer vorbestimmten Identifizierung enthalten.

8. System nach Anspruch 6 oder Anspruch 7, wobei die Kontrollmittel Mittel zum Vergleichen des Bereichs eines Speichers der zweiten peripheren Vorrichtung mit zumindest einem vorbestimmten Speicherbereich enthalten.

9. System nach einem der vorangehenden Ansprüche, wobei die Mittel der zumindest einen zweiten Vorrichtung zum Übertragen des zumindest einen empfangenen Befehls zum direkten Zugriff an eine Komponente der zweiten peripheren Vorrichtung Mittel zum Durchführen zumindest einer Operation an zumindest einer empfangen Datenangabe enthalten.

10. System nach einem der vorangehenden Ansprüche, wobei die zumindest eine erste periphere Vorrichtung ferner Mittel zum Identifizieren der zumindest einen zweiten peripheren Vorrichtung enthält sowie Mittel zum Übertragen eines Befehls zum direkten Zugriff auf einen Bereich eines Speichers der zweiten Vorrichtung dann, wenn der Speicher, der von dem von den Initiierungsmitteln stammenden Befehl zum direkten Zugriff angepeilt wird, zur zumindest einen zweiten peripheren Vorrichtung gehört.

## Claims

1. A computer system comprising a plurality of peripheral devices (600) and at least one switch (605) connected to each device of said plurality of peripheral devices, said switch comprising means for transferring a command to a plurality of components of said computer system, this system being **characterized in that**,
- at least one device of said plurality of peripheral devices, referred to as at least one first peripheral device, comprises means (425) for initiating at least one command for direct access to a plurality of memory areas, each of said memory areas being associated with a distinct component of said plurality of components;
- said switch comprises means for sending at least a part of said at least one command for direct access to each component of said plurality of components;
- at least one component of said plurality of components consists of at least one device of said plurality of peripheral devices, referred to as at least one second peripheral device, said at least one second peripheral device comprising the following means;
o means (400) for receiving at least one command for direct access to an area of a memory of said second peripheral device, said command being received from said at least one first peripheral device via said switch; and,
o means (415) for sending said at least one received command for direct access to a component of said second peripheral device,
said system enabling said at least one first device to perform a direct transfer of at least one item of data to or from a memory of said at least one first peripheral device from or to each component of said plurality of components on the basis of a single command.

2. A system according to the preceding claim wherein said at least one first device comprises means for performing at least one operation on at least one item of data among data received from said plurality of components in response to said at least one command.

3. A system according to the preceding claim wherein said at least one operation comprises at least one operation among logic operations, mathematical operations, sorting operations, coding operations and aggregation operations.

4. A system according to claim 2 or claim 3 wherein said means for performing said at least one operation comprise means for identifying said at least one operation according to at least one item of data among data received from said plurality of components in response to said at least one command.

5. A system according to any one of the preceding claims wherein at least one component of said plurality of components comprises a central memory (610) of said computer system.

6. A system according to any one of the preceding claims wherein said at least one second peripheral device further comprises means for checking the validity of said at least one part of said at least one command.

7. A system according to the preceding claim wherein said checking means comprise means for comparing an identifier of the sender of said at least one command for direct access with at least one predetermined identifier.

8. A system according to claim 6 or claim 7 wherein said checking means comprise means for comparing said area of a memory of said second peripheral device with at least one predetermined memory area.

9. A system according to any one of the preceding claims wherein said means of said at least one second device for sending said at least one received command for direct access to a component of said second peripheral device comprise means for performing at least one operation on at least one item of received data.

10. A system according to any one of the preceding claims wherein said at least one first peripheral device further comprises means for identifying said at least one second peripheral device and means for sending a command for direct access to an area of a memory of said second device when the memory concerned by the command for direct access coming from said initiating means belongs to said at least one second peripheral device.
